# EUROPEAN PATENT SPECIFICATION

(11) **EP 4 079 496 B1**
(45) Date of publication and mention of the grant of the patent: **11.02.2026**
(21) Application number: 22168125.7
(22) Date of filing: 13.04.2022
(51) Int. Cl.: B29D 11/00, G02B 1/04

(54) **CONTACT LENS AND MANUFACTURING METHOD THEREOF**
KONTAKTLINSE UND HERSTELLUNGSVERFAHREN DAFÜR
LENTILLE DE CONTACT ET SON PROCÉDÉ DE FABRICATION

(30) Priority: 16.04.2021 US 202163175567 P; 11.03.2022 TW 111109096
(43) Date of publication of application: 26.10.2022
(73) Proprietor: Pegavision Corporation, Taoyuan City 333 (TW)
(72) Inventor: KUNG, Hsiang-Ho, Taoyuan City 333 (TW); KO, Yen-Chun, Taoyuan City 333 (TW)
(74) Representative: Winter, Brandl - Partnerschaft mbB

(56) References cited:
- US-A1- 2009 145 086
- US-A1- 2012 026 457
- US-A1- 2020 129 671

## Description

### BACKGROUND

### Field of Invention

The present disclosure relates to a contact lens and a manufacturing method thereof.

### Description of Related Art

With the increasing popularity of contact lenses, the comfort, lubricity, and oxygen-permeability of the contact lenses have become more and more important to wearers. The use of higher permeability materials in the manufacture of contact lenses has become a trend, and this has motivated manufacturers to use siloxane-based materials to manufacture silicone hydrogel lenses. However, the silicone hydrogel lenses are hydrophobic, and therefore do not have good wetting properties. Therefore, manufacturers have been developing techniques to treat the lens surface, for example, by using a plasma treatment. However, the plasma treatment has the problem of high production costs.

In view of the above, there is a need to provide a new technique to treat the lens surface.

Document US 2012/026457 A1 relates to a cost-effective method for making a silicone hydrogel contact lens having a crosslinked hydrophilic coating thereon. Document US 2009/145086 A1 relates to a method of treating an ophthalmic lens in a package involving: placing the lens and an aqueous solution in a recess of package, wherein the solution includes an organic surface treatment agent that attaches to anterior and posterior surfaces of the lens; and sealing the recess of the package with lidstock and sterilizing the package contents.

### SUMMARY

The present invention as claimed in claim 1 provides a contact lens including a lens body and a hydrophilic surface modification layer. The lens body is formed by a lens composition including a reactive additive, in which the reactive additive has a reactive functional group, and a surface of the lens body has the reactive functional group. The hydrophilic surface modification layer includes a modification layer and a first hydrophilic layer, in which the modification layer is adhered on the surface of the lens body by covalently bonding to the reactive functional group, and the first hydrophilic layer is formed on the modification layer by covalently bonding a first hydrophilic compound to the modification layer. The lens body is sequentially covered by the modification layer and the first hydrophilic layer.

In some embodiments, the hydrophilic surface modification layer includes a plurality of hydrophilic resin structures dispersed on a first portion of the surface of the lens body, a second portion of the surface of the lens body is exposed, and a third portion of the modification layer is exposed.

In some embodiments, the modification layer is formed on the surface of the lens body by covalently bonding a compound containing an azetidinium group, an epoxy group, a vinyl group, or combinations thereof to the reactive functional group.

**In** some embodiments, the compound containing the azetidinium group includes an azetidinium-containing epichlorohydrin-functionalized polyamine, an azetidinium-containing epichlorohydrin-functionalized polyamidoamine, or combinations thereof.

**In** some embodiments, the reactive functional group includes a carboxyl group, an amino group, a thiol group, a hydroxyl group, or combinations thereof.

**In** some embodiments, the reactive additive includes acrylic acid, methacrylic acid, maleic acid, fumaric acid, aconitic acid, mesaconitic acid, citraconic acid, itaconitic acid, angelic acid, allylamine, 2-acrylamido-2-methylpropane sulfonic acid, vinylsulfonic acid, or combinations thereof.

**In** some embodiments, the content of the reactive additive in the lens composition is between 0.1 wt% and 10 wt%.

In some embodiments, the first hydrophilic compound includes a monosaccharide having a carboxyl group or an amino group, a disaccharide having a carboxyl group or an amino group, an oligosaccharide having a carboxyl group or an amino group, a polysaccharide having a carboxyl group or an amino group, or combinations thereof.

**In** some embodiments, the first hydrophilic compound includes hyaluronic acid, alginic acid, chondroitin sulfate, polyglutamic acid, sodium pyrrolidone carboxylate (sodium PCA), nicotinamide, derivatives of the above compounds, salts of the above acids, or combinations thereof.

In some embodiments, the first hydrophilic compound is a copolymer formed by copolymerizing at least one first monomer and at least one second monomer, in which the first monomer is a reactive vinylic monomer containing a carboxyl group or an amino group, and the second monomer is a non-reactive vinylic monomer.

In some embodiments, the reactive vinylic monomer includes acrylic acid, vinyl-functionalized acrylic acid, methacrylic acid, maleic acid, fumaric acid, aconitic acid, mesaconitic acid, citraconic acid, itaconitic acid, angelic acid, allylamine, 2-acrylamido-2-methylpropane sulfonic acid, vinylsulfonic acid, or combinations thereof.

In some embodiments, the non-reactive vinylic monomer includes acrylamide, phosphocholine, polyethylene glycol, 2-aminoethyl methacrylate hydrochloride, N-vinylpyrrolidone, N, N-dimethacrylamide, or combinations thereof.

In some embodiments, the non-reactive vinylic monomer is 55 wt% or more in the at least one first monomer and the at least one second monomer.

In some embodiments, the hydrophilic surface modification layer further includes a second hydrophilic layer formed on the first hydrophilic layer by covalently bonding a second hydrophilic compound to the first hydrophilic layer.

In some embodiments, the hydrophilic surface modification layer has a thickness of less than or equal to 100 nm.

In some embodiments, the contact lens of any one of the above embodiments has a contact angle hysteresis of less than or equal to 30 degrees.

The present invention as claimed in claim 11 provides a manufacturing method of a contact lens including the following operations. (i) A curing reaction is performed on a lens composition to form a lens body, in which the lens composition includes a reactive additive, the reactive additive has a reactive functional group, and a surface of the lens body has the reactive functional group. (ii) A surface modification is performed on the lens body. The surface modification includes forming a modification layer on the lens body, in which the modification layer is adhered on the surface of the lens body by covalently bonding to the reactive functional group, wherein forming the modification layer on the lens body includes: contacting the lens body with a compound containing an azetidinium group, an epoxy group, a vinyl group, or combinations thereof, in which the compound reacts with the reactive functional group to form a covalent bond, thereby forming the modification layer; and after forming the modification layer on the lens body, contacting the lens body having the modification layer with a first hydrophilic compound, in which the first hydrophilic compound reacts with the modification layer to form a covalent bond, thereby forming a first hydrophilic layer on the modification layer.

In some embodiments, performing the surface modification on the lens body is performed in a process of extraction and wetting.

In some embodiments, a first reaction time of the compound reacting with the reactive functional group is between 10 minutes and 12 hours, and a second reaction time of the first hydrophilic compound reacting with the modification layer is between 10 minutes and 12 hours.

**In** some embodiments, contacting the lens body with the compound containing the azetidinium group, the epoxy group, the vinyl group, or combinations thereof is performed at a first reaction temperature of between 20 °C and 140 °C.

**In** some embodiments, the first reaction temperature is between 20 °C and 40 °C.

**In** some embodiments, the compound containing the azetidinium group includes an azetidinium-containing epichlorohydrin-functionalized polyamine, an azetidinium-containing epichlorohydrin-functionalized polyamidoamine, or combinations thereof.

In some embodiments, the lens body is not treated by a plasma treatment before performing the surface modification on the lens body.

In some embodiments, the reactive functional group includes a carboxyl group, an amino group, a thiol group, a hydroxyl group, or combinations thereof.

In some embodiments, the reactive additive includes acrylic acid, methacrylic acid, maleic acid, fumaric acid, aconitic acid, mesaconitic acid, citraconic acid, itaconitic acid, angelic acid, allylamine,

2-acrylamido-2-methylpropane sulfonic acid, vinylsulfonic acid, or combinations thereof.

In some embodiments, the content of the reactive additive in the lens composition is between 0.1 wt% and 10 wt%.

**In** some embodiments, the first hydrophilic compound includes a monosaccharide having a carboxyl group or an amino group, a disaccharide having a carboxyl group or an amino group, an oligosaccharide having a carboxyl group or an amino group, a polysaccharide having a carboxyl group or an amino group, or combinations thereof.

In some embodiments, the first hydrophilic compound is a copolymer formed by copolymerizing at least one first monomer and at least one second monomer, the first monomer is a reactive vinylic monomer containing a carboxyl group or an amino group, and the second monomer is a non-reactive vinylic monomer.

In some embodiments, the reactive vinylic monomer includes acrylic acid, vinyl-functionalized acrylic acid, methacrylic acid, maleic acid, fumaric acid, aconitic acid, mesaconitic acid, citraconic acid, itaconitic acid, angelic acid, allylamine, 2-acrylamido-2-methylpropane sulfonic acid, vinylsulfonic acid, or combinations thereof.

In some embodiments, the non-reactive vinylic monomer includes acrylamide, phosphocholine, polyethylene glycol, 2-aminoethyl methacrylate hydrochloride, N-vinylpyrrolidone, **N,** N-dimethacrylamide, or combinations thereof.

In some embodiments, the manufacturing method of the contact lens further includes contacting the lens body having the modification layer and the first hydrophilic layer with a second hydrophilic compound, in which the second hydrophilic compound reacts with the first hydrophilic layer to form a covalent bond, thereby forming a second hydrophilic layer on the first hydrophilic layer.

### BRIEF DESCRIPTION OF THE DRAWINGS

The disclosure can be more fully understood by reading the following detailed description of the embodiment, with reference made to the accompanying drawings as follows:
Fig. 1 shows a phase image of a silicone hydrogel lens body with high oxygen-permeability of Example 1 taken with an atomic force microscope (AFM).
Fig. 2 shows a phase image of a surface-treated silicone hydrogel contact lens with high oxygen-permeability of Example 2 taken with an AFM.
Fig. 3 shows a phase image of Dailies Total 1 lens of Alcon taken with an AFM.
Fig. 4 shows contact angle hysteresis experiment results of silicone hydrogel contact lenses.
Fig. 5 shows transmittance experiment results of silicone hydrogel contact lenses after dyeing.
Fig. 6 to Fig. 8B show contact angle hysteresis experiment results of silicone hydrogel contact lenses.
Fig. 9A to Fig. 9B show transmittance experiment results of silicone hydrogel contact lenses after dyeing.
Fig. 10 to Fig. 11 show contact angle hysteresis experiment results of silicone hydrogel contact lenses.
Fig. 12 to Fig. 16 show indentation experiment results of silicone hydrogel contact lenses of different examples and a comparative example.

### DETAILED DESCRIPTION

The present disclosure provides a contact lens including a lens body and a hydrophilic surface modification layer. The lens body is formed by a lens composition including a reactive additive, in which the reactive additive has a reactive functional group, and a surface of the lens body has the reactive functional group. In some embodiments, the reactive functional group includes a carboxyl group, an amino group, a thiol group, a hydroxyl group, or combinations thereof. The hydrophilic surface modification layer includes a modification layer and a first hydrophilic layer. The modification layer is adhered on the surface of the lens body by covalently bonding to the reactive functional group. The first hydrophilic layer is formed on the modification layer by covalently bonding a first hydrophilic compound to the modification layer. In some embodiments, the modification layer is formed on the surface of the lens body by covalently bonding a compound containing an azetidinium group, an epoxy group, a vinyl group, or combinations thereof to the reactive functional group. In some embodiments, the hydrophilic surface modification layer includes modification layers and first hydrophilic layers, and the surface of the lens body is covered by the modification layer, the first hydrophilic layer, the modification layer, the first hydrophilic layer, etc., sequentially. The number of the modification layers and the first hydrophilic layers can be adjusted according to the design requirements. In some embodiments, the hydrophilic surface modification layer has a thickness of less than or equal to 100 nm, such as 10, 15, 20, 25, 30, 35, 40, 45, 50, 55, 60, 70, 80, 90, or 100 nm. The azetidinium group is a positively charged group and has a structure as shown in the following formula (1):

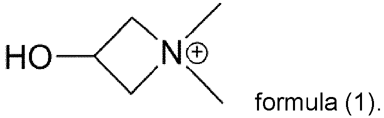

**In** the present disclosure, the lens body is formed by the lens composition including the reactive additive, so that the surface of the lens body has the reactive functional group that can be covalently bonded to the compound containing the azetidinium group, the epoxy group, the vinyl group, or combinations thereof. Compared with a process of forming a lens body and then treating the lens body with plasma, the present disclosure simplifies the process of manufacturing the contact lens, reduces the complexity of the process, and reduces the manufacturing cost.

**In** some embodiments, the hydrophilic surface modification layer includes a plurality of hydrophilic resin structures dispersed on a first portion of the surface of the lens body, a second portion of the surface of the lens body is exposed, and a third portion of the modification layer is exposed. Further explanations will be provided with phase images taken with an AFM.

**In** some embodiments, the contact lens has a contact angle hysteresis of less than or equal to 30 degrees. For example, the contact angle hysteresis is in the range of 1 degree to 30 degrees, such as 1, 2, 3, 4, 5, 6, 7, 8, 9, 10, 15, 20, 25, or 30 degrees. **It** can be seen that the contact lens of the present disclosure has excellent hydrophilicity.

**In** some embodiments, the hydrophilic surface modification layer further includes a second hydrophilic layer formed on the first hydrophilic layer by covalently bonding a second hydrophilic compound to the first hydrophilic layer. The type of second hydrophilic compound can be selected according to the manufacturer design requirements to give the contact lens the desired properties.

The present disclosure provides a manufacturing method of a contact lens including the following operations. (i) A curing reaction is performed on a lens composition to form a lens body, in which the lens composition includes a reactive additive, the reactive additive has a reactive functional group, and a surface of the lens body has the reactive functional group. In some embodiments, the reactive functional group includes a carboxyl group, an amino group, a thiol group, a hydroxyl group, or combinations thereof. (ii) A surface modification is performed on the lens body. The surface modification includes forming a modification layer on the lens body, in which the modification layer is adhered on the surface of the lens body by covalently bonding to the reactive functional group; and contacting the lens body having the modification layer with a first hydrophilic compound, in which the first hydrophilic compound reacts with the modification layer to form a covalent bond, thereby forming a first hydrophilic layer on the modification layer.

In some embodiments, forming the modification layer on the lens body includes: contacting the lens body with a compound containing an azetidinium group, an epoxy group, a vinyl group, or combinations thereof. The compound reacts with the reactive functional group to form a covalent bond, thereby forming the modification layer. In the operation of performing the surface modification on the lens body, only a low-temperature environment is required to react the compound containing the azetidinium group, the epoxy group, the vinyl group, or combinations thereof with the reactive functional group to form sufficient covalent bonds. Therefore, the modification layer with good adhesion is formed on the surface of the lens body. The manufacturing method of the present disclosure is capable of producing the contact lens with excellent hydrophilicity at low temperature. In some embodiments, contacting the lens body with the compound containing the azetidinium group, the epoxy group, the vinyl group, or combinations thereof is performed at a first reaction temperature of between 20 °C and 140 °C. In some embodiments, the first reaction temperature is between 20 °C and 40 °C.

From the above steps, it can be known that the modification layer and the first hydrophilic layer are formed in two different steps. It can be seen that the modification layer is interposed between the lens body and the first hydrophilic layer. In some embodiments, the compound and the first hydrophilic compound form a cross-linked structure that covers the surface of the lens body.

In some embodiments, performing the surface modification on the lens body is performed in a process of extraction and wetting. In other words, the surface modification operation of the present disclosure can be integrated in the extraction and wetting process of the existing contact lens preparation. Therefore, the surface modification of the lens body can be performed without significant adjustment of the existing process and equipment.

In some embodiments, the manufacturing method of the contact lens further includes contacting the lens body having the modification layer and the first hydrophilic layer with a second hydrophilic compound, in which the second hydrophilic compound reacts with the first hydrophilic layer to form a covalent bond, thereby forming a second hydrophilic layer on the first hydrophilic layer. The type of second hydrophilic compound can be selected according to the manufacturer design requirements to give the contact lens the desired properties.

In some embodiments, a first reaction time of the compound reacting with the reactive functional group is between 10 minutes and 12 hours, and a second reaction time of the first hydrophilic compound reacting with the modification layer is between 10 minutes and 12 hours.

In some embodiments, the lens body is not treated by a plasma treatment before performing the surface modification on the lens body. In some embodiments, a polyionic material is not deposited on the surface of the lens body before performing the surface modification on the lens body. Therefore, compared with a process of forming the lens body and then treating the lens body with plasma, the manufacturing method of the present disclosure is more simplified, and the complexity of the process can be reduced.

In some embodiments, the operation of contacting the lens body with the compound containing the azetidinium group, the epoxy group, the vinyl group, or combinations thereof includes soaking the lens body in a solution containing the compound, in which the content of the compound is 0.005 wt% to 5 wt%, such as 0.005, 0.01, 0.02, 0.03, 0.04 0.05, 0.1, 0.5, 1, 2, 3, 4, or 5wt%.

In some embodiments, the operation of contacting the lens body having the modification layer with the first hydrophilic compound includes: soaking the lens body having the modification layer in a solution containing the first hydrophilic compound, in which the content of the first hydrophilic compound is 0.005 wt% to 2.5 wt%, such as 0.005, 0.01, 0.05, 0.1, 0.5, 1, 1.5, 2, or 2.5 wt%.

In some embodiments, the manufacturing method of the contact lens further includes sterilizing the lens body having the modification layer and the first hydrophilic layer by an autoclaving. The autoclaving can further enhance the hydrophilicity of the contact lens and reduce the contact angle hysteresis of the contact lens.

Next, with respect to the aforementioned contact lenses and the method of manufacturing the contact lenses, the materials and content of the lens composition, the reactive additive, the first hydrophilic compound, the second hydrophilic compound, and the compound containing the azetidinium group, the epoxy group, the vinyl group, or combinations thereof are further illustrated in various embodiments.

In some embodiments, the lens composition includes a silicon polymer having a structure as shown in the following formula (2): 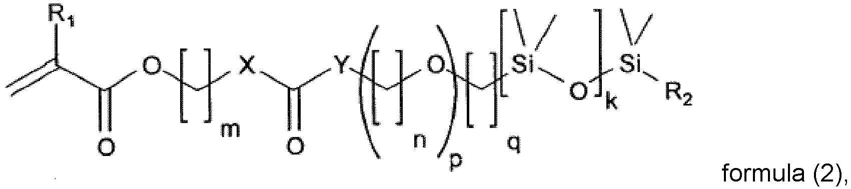 in which X is a secondary amine group (-NH-) or oxygen, Y is a secondary amine group (-NH-) or oxygen, at least one of X and Y is the secondary amine group (-NH-). R₁ is hydrogen or methyl, R₂ is a C1-C10 alkyl group, m is an integer of 2 to 4, n is an integer of 2 to 4, p is an integer of 0 to 4, q is an integer of 2 to 4, and k is an integer that makes the average molecular weight of the silicone polymer in the range of 600-3000. In some embodiments, an atomic number ratio of silicon to nitrogen is from 20:1 to 5:1. In some embodiments, the content of the silicon polymer is from 5 wt% to 50 wt% based on 100 wt% of the lens composition.

In some embodiments, when X of formula (2) is the secondary amine group (-NH-), Y is oxygen, m is 2, n is 2, p is 1, and q is 3, the silicone polymer has a structure as shown in the following formula (3): 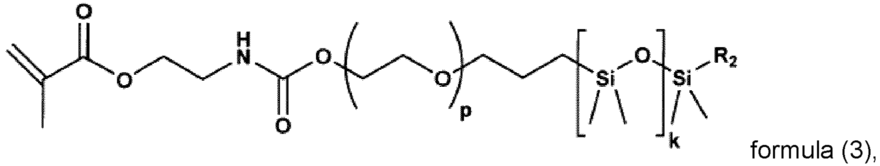 in which k is an integer that makes the average molecular weight of the silicone polymer in the range of 600-3000, p is an integer from 0 to 4, and R₂ is a C1-C10 alkyl group.

In some other embodiments, the lens composition includes a silicon polymer having a structure as shown in the following formula (4): 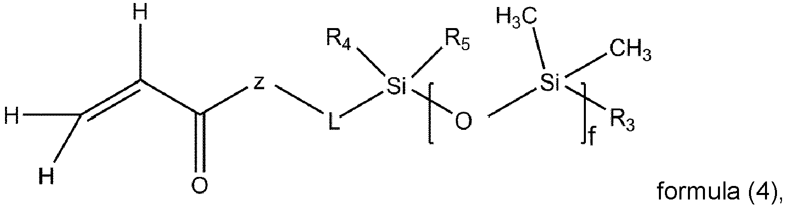 in which Z is O or NH; L is (CH₂)ₑ, (CH₂)ₑ-[O(CH₂)ₐ]_{b}, or (CH₂)ₑ(CHOH)-[O(CH₂)ₐ]_{b}; R₃ is an alkyl group; R₄ is OH, CH₃, or OSi(CH₃)₃; R₅ is CH₃ or OSi(CH₃)₃; f is an integer from 1 to 30; e and a are integers from 2 to 5; and b is an integer from 1 to 5.

In some other embodiments, the lens composition includes a silicone polymer, and the silicone polymer is α-acrylamidopropyl-ω-butyl polydimethylsiloxane. However, the present disclosure is not intended to be limited in scope to the silicone polymers listed above for illustrative purposes.

In some embodiments, the lens composition further includes a hydrophilic monomer, a crosslinker, or a combination thereof. In some embodiments, the hydrophilic monomer includes N-vinylpyrrolidone (NVP), 2-hydroxyethyl methacrylate (HEMA), glycerol methacrylate (GMA), 2-hydroxy-butyl methacrylate, acrylic acid, methacrylic acid (MAA), N,N-dimethylacrylamide (DMA), N,N-dimethyl methacrylamide, N-vinyl-N-methyl acetamide, 2-methacryloyloxyethyl phosphorylcholine, or combinations thereof. In some embodiments, the crosslinker includes 1,3,5-triallyl isocyanurate (TAIC), ethylene diacrylate, ethylene glycol di(meth)acrylate (EGDA), triethylene glycol di(meth)acrylate, tetramethylene glycol di(meth)acrylae, trimethylolpropane tri(meth)acrylate (TRIM), pentaerythritol tetra(meth)acrylate, bisphenol A di(meth)acrylate, methylenebis(meth)acrylamide, divinyl ether, divinyl sulfone, divinyl benzene, trivinyl benzene, triallyl isocyanurate, triallyl phthalate, diallyl phthalate, allyl methacrylate, or combinations thereof.

In some embodiments, the reactive additive includes acrylic acid, methacrylic acid, maleic acid, fumaric acid, aconitic acid, mesaconitic acid, citraconic acid, itaconitic acid, angelic acid, allylamine, 2-acrylamido-2-methylpropane sulfonic acid, vinylsulfonic acid, or combinations thereof. In some embodiments, the content of the reactive additive in the lens composition is between 0.1 wt% and 10 wt%, such as 0.1, 0.5, 1, 2, 3, 4, 5, 6, 7, 8, 9, or 10 wt%. When the content of the reactive additive falls within the above-mentioned range, the lens body formed from the lens composition has sufficient reactive functional groups to react with the compounds containing the azetidinium group, the epoxy group, the vinyl group, or combinations thereof, so that the modification layer formed from the compounds has good adhesion.

In some embodiments, the first hydrophilic compound includes a monosaccharide having a carboxyl group or an amino group, a disaccharide having a carboxyl group or an amino group, an oligosaccharide having a carboxyl group or an amino group, a polysaccharide having a carboxyl group or an amino group, or combinations thereof. In some embodiments, the first hydrophilic compound includes hyaluronic acid, alginic acid, chondroitin sulfate, polyglutamic acid, sodium pyrrolidone carboxylate, nicotinamide, derivatives of the above compounds, salts of the above acids, or combinations thereof. For example, the salt of the above acids is hyaluronate, alginate, or polyglutamate. The alginate is, for example, sodium alginate.

In some embodiments, the first hydrophilic compound is a copolymer formed by copolymerizing at least one first monomer and at least one second monomer, in which the first monomer is a reactive vinylic monomer containing a carboxyl group or an amino group, and the second monomer is a non-reactive vinylic monomer. For example, the first hydrophilic compound is a copolymer formed by copolymerizing a reactive vinylic monomer and two different non-reactive vinylic monomers.

In some embodiments, the reactive vinylic monomer includes acrylic acid, vinyl-functionalized acrylic acid, methacrylic acid, maleic acid, fumaric acid, aconitic acid, mesaconitic acid, citraconic acid, itaconitic acid, angelic acid, allylamine, 2-acrylamido-2-methylpropane sulfonic acid, vinylsulfonic acid, or combinations thereof. In some embodiments, the vinyl-functionalized acrylic acid may be obtained by reacting a vinyl-functionalized reagent with acrylic acid, and the vinyl-functionalized reagent may include α-cyanoacrylate, diethylene glycol diacrylate, divinyl sulfone, or any other vinyl-functionalized reagent known in the art.

In some embodiments, the non-reactive vinylic monomer includes acrylamide, phosphocholine, polyethylene glycol, 2-aminoethyl methacrylate hydrochloride, N-vinylpyrrolidone, N, N-dimethacrylamide, or combinations thereof. The phosphocholine is, for example, 2-methacryloyloxy ethyl phosphorylcholine.

In some embodiments, the non-reactive vinylic monomer is 55 wt% or more in the at least one first monomer and the at least one second monomer.

In some embodiments, the reactive vinylic monomer is 55wt% to 90wt%, for example, 55, 60, 65, 70, 75, 80, 85, or 90wt%. The content of non-reactive vinylic monomer can be adjusted according to the manufacturer design requirements to obtain the contact lens with the desired properties.

In some embodiments, the first hydrophilic compound includes a copolymer of acrylamide and vinyl-functionalized acrylic acid, or a copolymer of acrylamide, methacrylic acid, and 2-methacryloyloxy ethyl phosphorylcholine.

In some embodiments, the second hydrophilic compound is a copolymer formed by copolymerizing at least one non-reactive vinylic monomer. In some embodiments, the non-reactive vinylic monomer includes acrylamide, phosphocholine, polyethylene glycol, 2-aminoethyl methacrylate hydrochloride, N-vinylpyrrolidone, **N,** N-dimethacrylamide, or combinations thereof. The phosphocholine is, for example, 2-methacryloyloxy ethyl phosphorylcholine. For example, the second hydrophilic compound is a copolymer of acrylamide and 2-aminoethyl methacrylate hydrochloride. However, the present disclosure is not limited to the above compounds. The first hydrophilic compound can be modified by molecular design to have a first functional group, and the second hydrophilic compound can be modified by molecular design to have a second functional group. The first functional group and the second functional group can react to produce covalent bonding. The type of the second hydrophilic compound can be selected according to the manufacturer design requirements to give the contact lens the desired properties.

In some embodiments, the compound containing the azetidinium group includes an azetidinium-containing epichlorohydrin-functionalized polyamine, an azetidinium-containing epichlorohydrin-functionalized polyamidoamine, or combinations thereof. For example, the epichlorohydrin-functionalized polyamine is polyamide epichlorohydrin (PAE). The polyamide epichlorohydrin is also known by other names, such as polyaminoamide-epichlorohydrin, polyamide-polyamine-epichlorohydrin, polyamide-epichlorohydrin, or polyamide polyamine epichlorohydrin.

The following describes the features of the present disclosure more specifically with reference to Examples 1 to 12.

Example 1: Preparation of silicone hydrogel lens body with high oxygen-permeability

Example 1 includes the following operations. (i) N-vinylpyrrolidone (NVP), 2-hydroxyethyl methacrylate (HEMA), N,N-dimethylacrylamide (DMA), methacrylic acid (MAA), (3-methacryloxy-2-hydroxypropoxy) propyl bis(trimethyl-siloxy) methylsilane, a silicone polymer having an average molecular weight of 1500 (refer to the previous formula (3)), ethylene glycol di(meth)acrylate, 1,3,5-triallyl isocyanurate (TAIC), 2(2-hydroxy-5-methacryloxyethylphenyl)-2H-benzotriazole, a photoinitiator Irgacure 819, a reactive blue 19, and tert-amyl alcohol were mixed to form a silicone hydrogel composition. (ii) The silicone hydrogel composition was filled into a cavity of a polypropylene mold and cured under UV light for 12 min to form a lens body. (iii) After the lens body was dried and removed, the lens body was extracted in isopropanol at 40 °C for 1 hour, extracted in 50/50 (v/v) isopropanol/water at 40 °C for 1 hour, added to deionized water, and stirred at 40 °C for 1 hour. Finally, the lens body was placed in a borate buffered saline at pH 7.3-7.4 for sterilization by autoclaving to obtain a contact lens, i.e., a silicone hydrogel lens body with high oxygen-permeability.

### Example 2: Surface treatment of silicone hydrogel lens body with high oxygen-permeability

Example 2 includes the following operations. (i) The silicone hydrogel lens body with high oxygen-permeability of Example 1 was placed in a 0.2% azetidinium-containing polyamide epichlorohydrin (PAE) solution and heated at 35°C for 30 minutes. Afterwards, the lens body was placed in a 0.01% solution including a copolymer of acrylamide and vinyl-functionalized acrylic acid and reacted for half an hour, and then the lens body was placed in a 0.02% solution including a copolymer of acrylamide and 2-aminoethyl methacrylate hydrochloride and reacted for half an hour. (ii) The lens body was rinsed with deionized water and placed in a borate buffered saline at pH 7.4 for sterilization by autoclaving to obtain a contact lens with a surface having excellent hydrophilicity.

### Example 3: Atomic force microscope phase image of silicone hydrogel contact lens with high oxygen-permeability

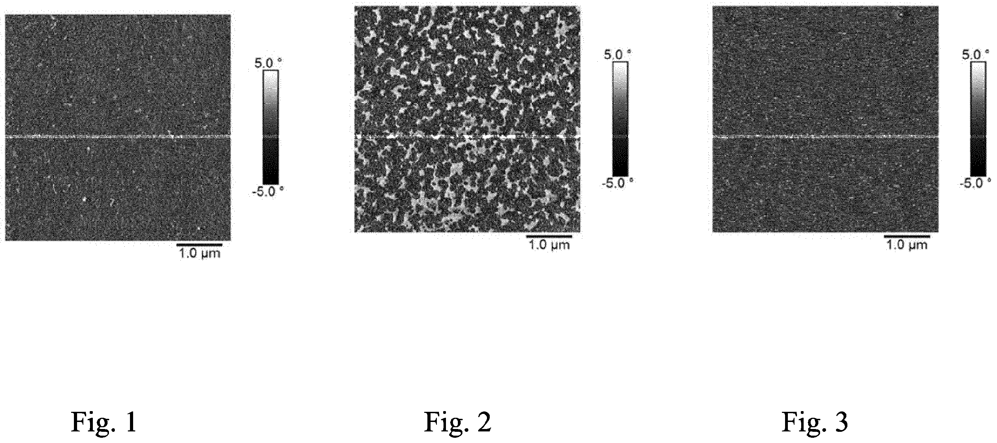

The surface phase image of the silicone hydrogel lens body is taken with an atomic force microscope (AFM). The AFM is operated in the tapping mode. Please refer to Fig. 1 and Fig. 2. Fig. 1 shows a phase image of the silicone hydrogel lens body with high oxygen-permeability of Example 1 taken with the AFM. Fig. 2 shows a phase image of the surface-treated silicone hydrogel contact lens with high oxygen-permeability of Example 2 taken with the AFM.

As shown in Fig. 1, the surface of the silicone hydrogel lens body has a homogeneous elastic modulus. As shown in Fig. 2, after the surface of the silicone hydrogel lens body is modified, a plurality of blocky hydrophilic resin structures is formed and dispersed on the surface of the lens body. These hydrophilic resin structures are network structure. In more detail, the hydrophilic resin structures are dispersed on a part of the surface of the silicone hydrogel lens body, and the other part of the surface of the silicone hydrogel lens body is exposed. The dark areas and light areas in Fig. 2 demonstrate the existence of two different materials. Comparing Fig. 1 and Fig. 2, it can be seen that there is indeed a difference between the surface structure of the lens body of Example 1 and that of the contact lens of Example 2.

Please refer to Fig. 3, which shows a phase image of Dailies Total 1 lens of Alcon taken with the AFM. The hydrophilic resin structures on the surface-treated silicone hydrogel lens body of Example 2 of the present disclosure are formed by a multi-step process. The surface of the Dailies Total 1 lens has one hydrophilic layer. Comparing Fig. 2 and Fig. 3, it is clear that the surface structure of the Dailies Total 1 lens of Alcon differs from the surface structure of the contact lens of Example 2 of the present disclosure.

### Example 4: Testing the properties of silicone hydrogel contact lens with high oxygen-permeability

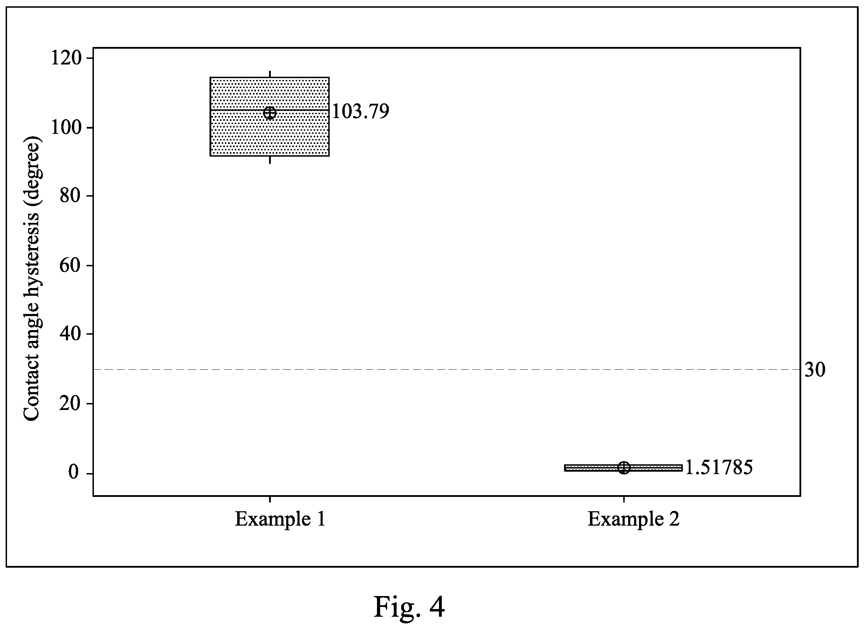

Several silicone hydrogel lens bodies of Example 1 and several silicone hydrogel contact lenses of Example 2 were taken for testing their dynamic contact angles (DCA). Please refer to Fig. 4, which shows contact angle hysteresis experiment results of the silicone hydrogel contact lenses. The average contact angle hysteresis of the silicone hydrogel lens bodies of Example 1 is about 104°. The average contact angle hysteresis of the silicone hydrogel contact lenses of Example 2 is less than 30° or even less than 5°. The smaller contact angle hysteresis represents that the lens has higher hydrophilic and wetting properties. It can be seen that there is a significant difference in the hydrophilicity between the silicon hydrogel lens body of Example 1 and the silicon hydrogel contact lens of Example 2, and that the surface-treated contact lenses of the present disclosure have excellent hydrophilicity.

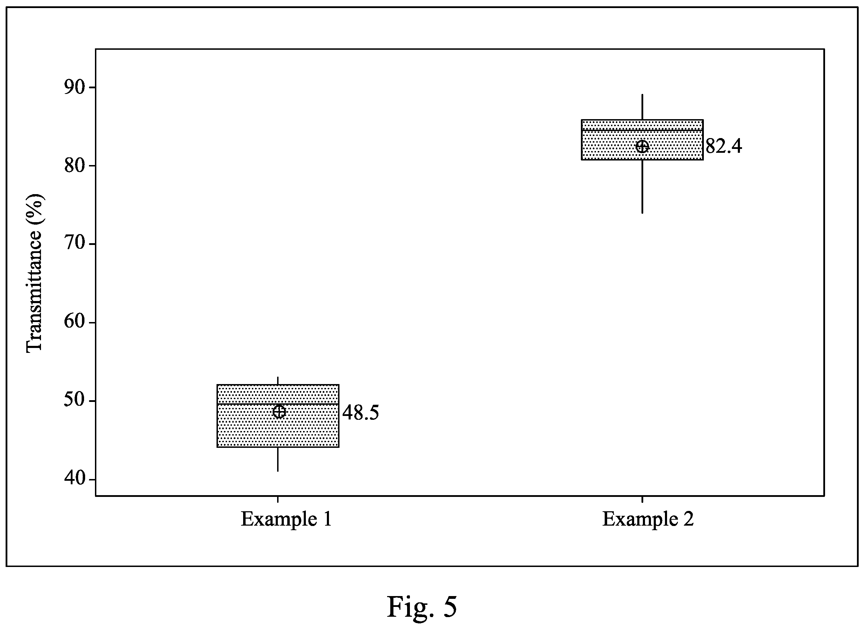

After several silicone hydrogel lens bodies of Example 1 and several silicone hydrogel contact lenses of Example 2 were dyed by Sudan Black dye, these lenses were taken for testing their transmittance and calculating the average transmittance. Please refer to Fig. 5, which shows transmittance experiment results of the silicone hydrogel contact lenses after dyeing. The Sudan Black tends to adsorb onto hydrophobic substances and does not easily adhere to hydrophilic surfaces. The silicon hydrogel lens bodies of Example 1 were untreated, and the Sudan Black dye was easily adsorbed on them because of their poor hydrophilicity. Therefore, the transmittance of the silicon hydrogel lens bodies of Example 1 was low after dyeing. The silicone hydrogel contact lenses of Example 2 were treated, and the Sudan Black dye was not easily adsorbed on them because of their good hydrophilicity. Therefore, the transmittance of the silicone hydrogel contact lenses of Example 2 was high after dyeing. The transmittance can be 80% or more. It can be seen that the surface treatment at low temperature can effectively improve the hydrophilicity of the contact lenses.

Example 5: Durability test of silicone hydrogel contact lens with high oxygen-permeability (isopropanol soak test)

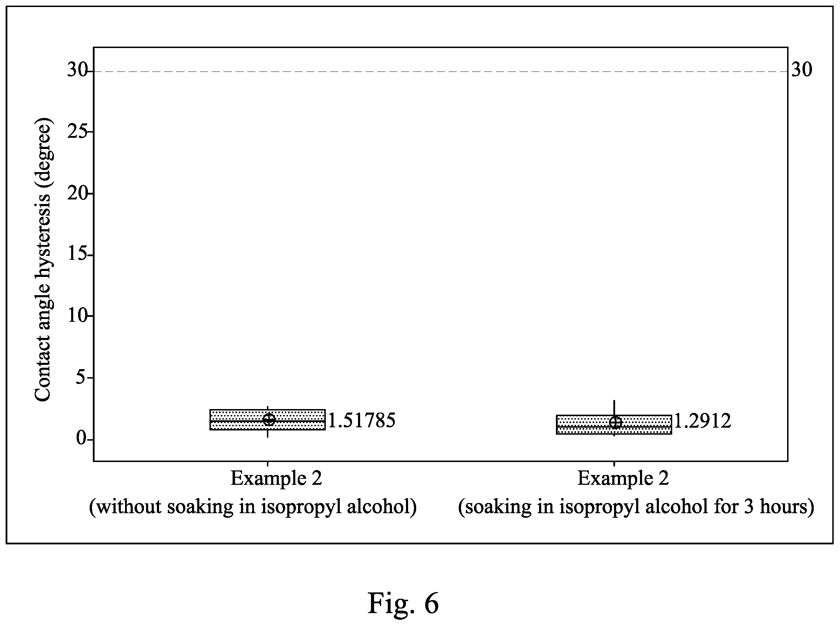

After several silicone hydrogel contact lenses of Example 2 were placed in an aqueous solution of isopropanol (IPA) for 3 hours, the silicone hydrogel contact lenses expanded by 30%, and the substances that were poorly cross-linked with the lens bodies fell into the solution. Afterwards, the silicone hydrogel contact lenses were washed in water and transferred to a borate buffered saline to measure their dynamic contact angles again. The average contact angle hysteresis of their surfaces was less than 5°. Please refer to Fig. 6, which shows contact angle hysteresis experiment results of the silicone hydrogel contact lenses. As can be seen from Fig. 6, the average contact angle hysteresis of the silicone hydrogel contact lenses of Example 2 after soaking in the isopropanol solution for 3 hours is not significantly different from the average contact angle hysteresis of the silicone hydrogel contact lenses of Example 2 without soaking. It can be seen that the silicone hydrogel contact lenses of Example 2 retained good hydrophilicity and had excellent durability after soaking in the isopropanol.

Example 6: Durability test of silicone hydrogel contact lens with high oxygen-permeability (friction test)

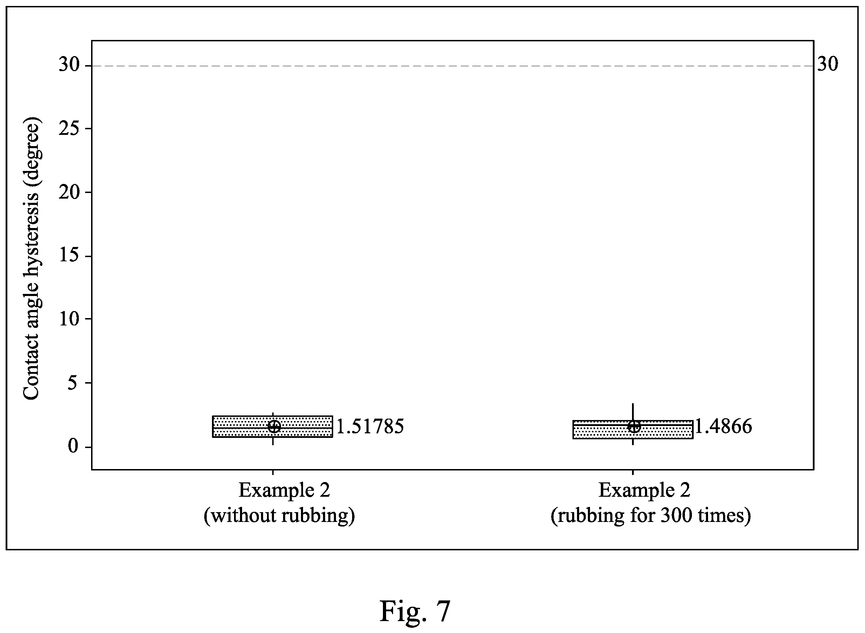

Several silicone hydrogel contact lenses of Example 2 were rubbed 300 times with finger pulps, and then their dynamic contact angles were measured. The average contact angle hysteresis of their surfaces was less than 5°. Please refer to Fig. 7, which shows contact angle hysteresis experiment results of the silicone hydrogel contact lenses. As can be seen from Fig. 7, the average contact angle hysteresis of the silicon hydrogel contact lenses of Example 2 rubbed 300 times is not significantly different from the average contact angle hysteresis of the silicon hydrogel contact lenses of Example 2 without being rubbed. It can be seen that the silicone hydrogel contact lenses of Example 2 retained good hydrophilicity and had excellent durability after rubbing.

### Example 7: Preparation of silicone hydrogel lens body with moderate oxygen-permeability

Example 7 includes the following operations. (i) α-acrylamidopropyl-ω-butyl polydimethylsiloxane, N, N-dimethylacrylamide (DMA), 2-hydroxyethylacrylamide (HEAA), N-vinylpyrrolidone (NVP), ethylene diacrylate, acrylic acid, 1,3,5-triallyl isocyanurate (TAIC), a photoinitiator diphenyl(2,4,6-trimethylbenzoyl)phosphine oxide (TPO), a blue colorant (RB-19), and tert-amyl alcohol were mixed to form a silicone hydrogel composition. (ii) The silicone hydrogel composition was filled into a cavity of a polypropylene mold, and a light-curing reaction was carried out using a lens fabrication equipment. The lens body was formed by applying 30 mJ/cm² of UV light for 4 minutes, 225 mJ/cm² of UV light for 4 minutes, 300 mJ/cm² of UV light for 2 minutes, and 470 mJ/cm² of UV light for 2 minutes with the lens fabrication equipment. (iii) After the lens body was extracted with water, the lens body was soaked in a borate buffered saline or phosphate buffer saline of pH 7.3-7.4 and sterilized at 121 °C by autoclaving for 30 minutes to form a contact lens.

### Example 8: Surface treatment of silicone hydrogel lens body with moderate oxygen-permeability

Example 8 includes the following operations. (i) The silicone hydrogel lens body of Example 7 with moderate oxygen-permeability was placed in a 0.2% azetidinium-containing polyamide epichlorohydrin (PAE) solution and heated at 31 °C for 2 hours. The lens body was placed in a 0.05% sodium alginate solution and heated at 30°C for 1 hour. A contact lens of Example 8-1 was obtained and stored in a borate buffered saline of pH 7.4. (ii) The lens body was rinsed with deionized water and placed in a borate buffered saline at pH 7.4 for sterilization by autoclaving to obtain a contact lens of Example 8-2 having excellent hydrophilicity.

### Example 9: Surface treatment of silicone hydrogel lens body with moderate oxygen-permeability

Example 9 includes the following operations. (i) The silicone hydrogel lens body with moderate oxygen-permeability of Example 7 was placed in a 0.2% azetidinium-containing polyamide epichlorohydrin (PAE) solution and heated at 31 °C for 2 hours. The lens body was placed in a 0.04% solution including a copolymer of acrylamide, methacrylic acid, and 2-methacryloyloxyethyl phosphorylcholine and heated at 30 °C for 1 hour to obtain a contact lens of Example 9-1, which was stored in a borate buffered saline at pH 7.4. (ii) The contact lens was rinsed with deionized water and placed in a borate buffered saline at pH 7.4 for sterilization by autoclaving to obtain a contact lens of Example 9-2 having excellent hydrophilicity.

### Example 10: Testing the properties of silicone hydrogel contact lens with moderate oxygen-permeability

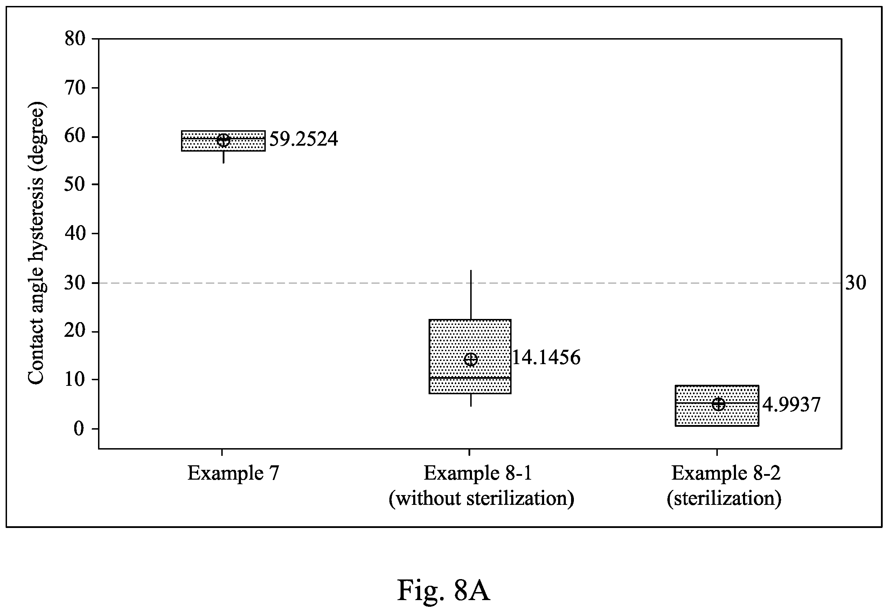

Several silicone hydrogel contact lenses of Example 7, Example 8-1, and Example 8-2 were taken for testing their dynamic contact angles. Please refer to Fig. 8A, which shows contact angle hysteresis experiment results of the silicone hydrogel contact lenses. The average contact angle hysteresis of the silicone hydrogel contact lenses of Example 7 is about 59°. The average contact angle hysteresis of the silicone hydrogel contact lenses of Example 8-1 and Example 8-2 are less than 30° or even less than 15°. The smaller contact angle hysteresis represents that the lens has higher hydrophilic and wetting properties. It can be seen that the hydrophilicity of the silicone hydrogel contact lenses of Example 7 is significantly different from that of Examples 8-1 and 8-2, and that the surface-treated contact lenses of the present disclosure have excellent hydrophilicity. Moreover, it can be seen that the autoclaving can further enhance the hydrophilicity of the contact lenses.

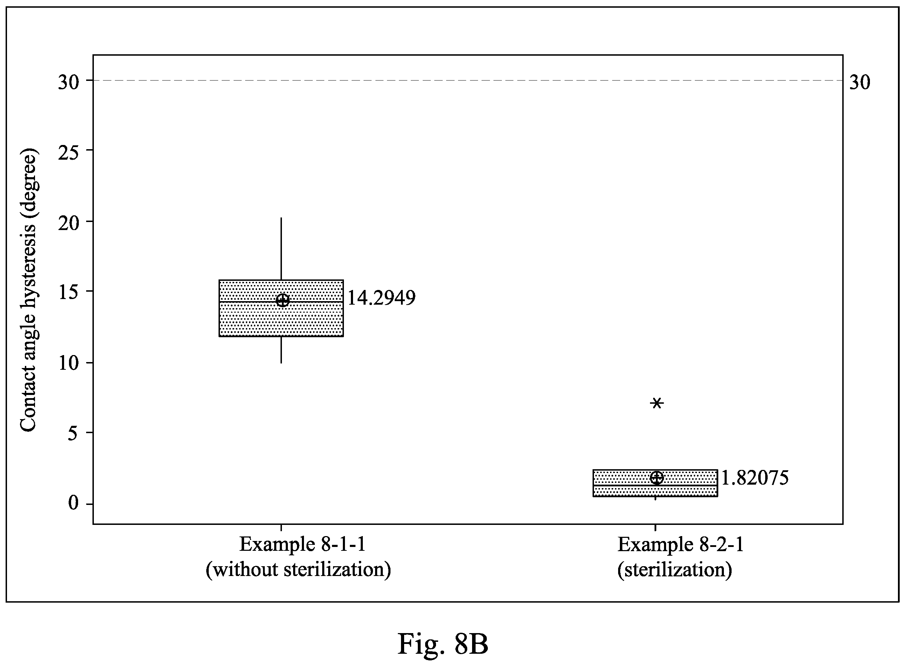

The preparation processes of the silicone hydrogel contact lenses of Example 8-1 and Example 8-2 were repeated, and the effective contact between the lens bodies and the treatment solution (i.e., sodium alginate solution) was further improved. In detail, the treatment solution was hold in a container with mesh like holes, so that the lens bodies could uniformly contact the treatment solution during the heating process to produce the contact lenses of Example 8-1-1 and Example 8-2-1. Several silicone hydrogel contact lenses of Example 8-1-1 and Example 8-2-1 were taken for testing their dynamic contact angles. Please refer to Fig. 8B, which shows contact angle hysteresis experiment results of the silicone hydrogel contact lenses. The average contact angle hysteresis of the silicone hydrogel contact lenses of Example 8-1-1 and Example 8-2-1 are less than 30° or even less than 15°. Compared with Fig. 8A, the data in Fig. 8B are more concentrated, which means that the experimental stability is better. In addition, the surface energy of the lenses can be reduced by the addition of surfactant, which can increase the effective contact between the lenses and the treatment solution and improve the experimental stability.

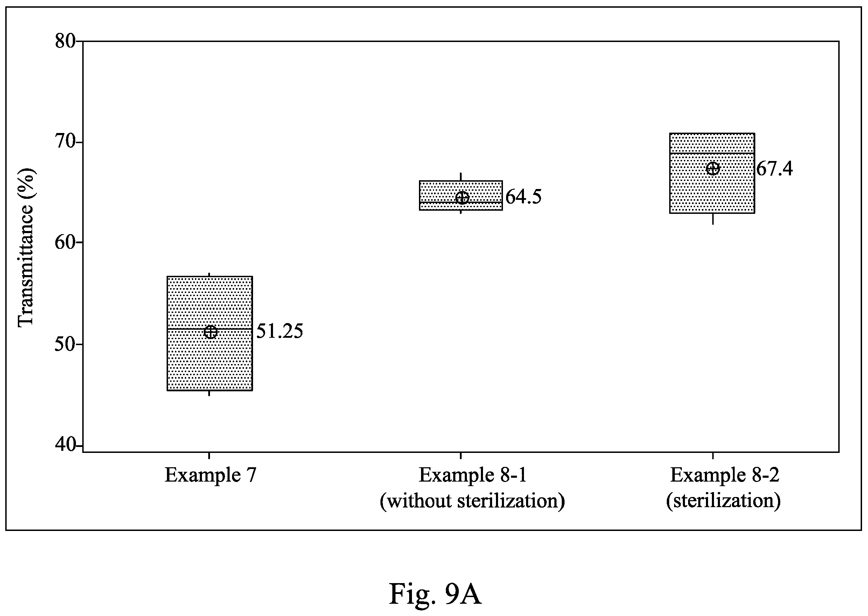

After several silicone hydrogel contact lenses of Example 7, Example 8-1, and Example 8-2 were dyed by Sudan Black dye, these lenses were taken for testing their transmittance and calculating the average transmittance. Please refer to Fig. 9A, which shows transmittance experiment results of the silicone hydrogel contact lenses after dyeing. The Sudan Black tends to adsorb onto hydrophobic substances and does not easily adhere to hydrophilic surfaces. The silicon hydrogel lens bodies of Example 7 were untreated, and the Sudan Black dye was easily adsorbed on them because of their poor hydrophilicity. Therefore, the transmittance of the silicon hydrogel lens bodies of Example 7 was low after dyeing. The silicone hydrogel contact lenses of Example 8-1 and Example 8-2 were treated, and the Sudan Black dye was not easily adsorbed on them because of their good hydrophilicity. Therefore, the transmittance of the silicone hydrogel contact lenses of Example 8-1 and Example 8-2 was high after dyeing. The transmittance can be 60% or more.

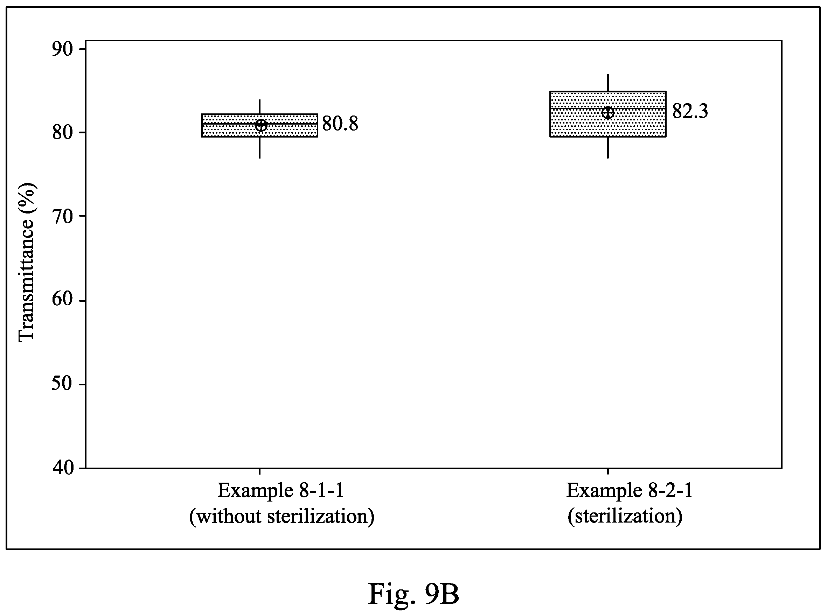

Please refer to Fig. 9B, which shows transmittance experiment results of the silicone hydrogel contact lenses after dyeing. The silicone hydrogel contact lenses of Example 8-1-1 and Example 8-2-1 were treated, and the Sudan Black dye was not easily adsorbed on them because of their good hydrophilicity. Since the effective contact between the lens bodies and the treatment solution (i.e., sodium alginate solution) were improved during the manufacturing process, the transmittance of the silicone hydrogel contact lenses of Examples 8-1-1 and 8-2-1 is high after dyeing, and the transmittance can be 80% or more. From Fig. 9A and Fig. 9B, it can be seen that under the same reaction conditions, the stability of treating the lens body surface and the treatment efficiency can be increased by adjusting the structure of the container, i.e., by using the container with mesh like holes to contain the treatment solution, to increase the contact of the treatment solution with the lens body.

From the above experiment, it can be seen that the surface treatment at low temperature can effectively improve the hydrophilicity of the contact lenses, and it can be known that the autoclaving can further enhance the hydrophilicity of the contact lenses.

### Example 11: Testing the properties of silicone hydrogel contact lens with moderate oxygen-permeability

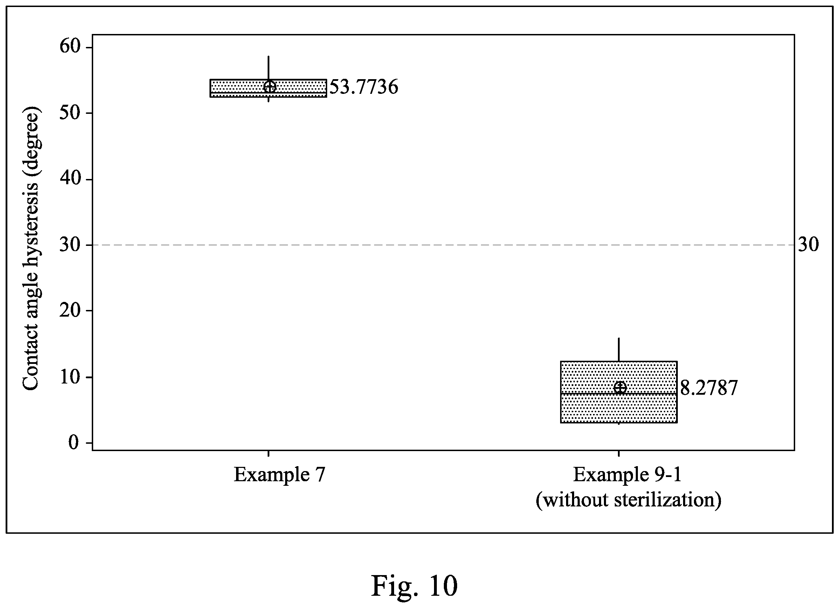

Several silicone hydrogel contact lenses of Example 7 and Example 9-1 were taken for testing their dynamic contact angles. Please refer to Fig. 10, which shows contact angle hysteresis experiment results of the silicone hydrogel contact lenses. The average contact angle hysteresis of the silicone hydrogel lens bodies of Example 7 is about 54°. The average contact angle hysteresis of the silicone hydrogel contact lenses of Example 9-1 is less than 30° or even less than 15°. The smaller contact angle hysteresis represents that the lens has higher hydrophilic and wetting properties. It can be seen that the hydrophilicity of the silicone hydrogel lens bodies of Example 7 is significantly different from that of the silicon hydrogel contact lenses of Example 9-1, and that the surface-treated contact lenses of the present disclosure have excellent hydrophilicity.

### Example 12: Durability test of silicone hydrogel contact lens with moderate oxygen-permeability (friction test)

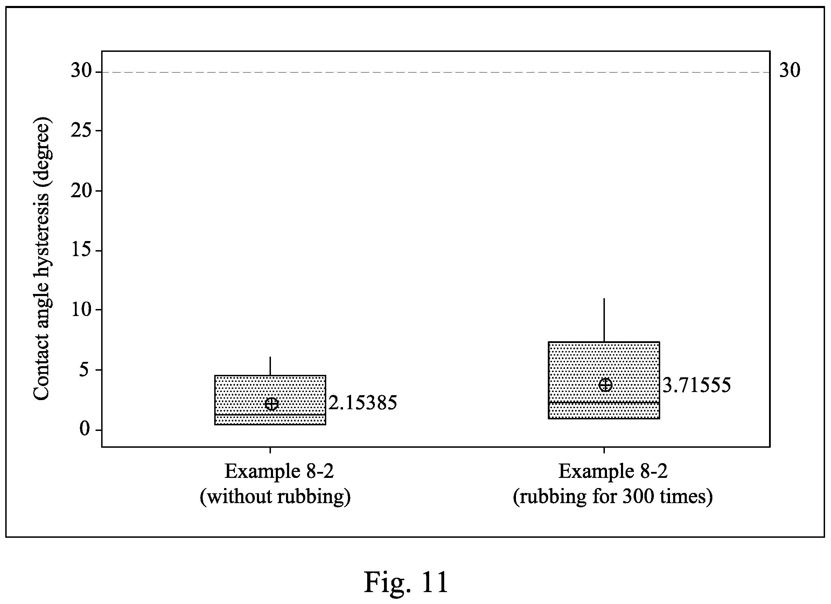

Several silicone hydrogel contact lenses of Example 8-2 were rubbed 300 times with finger pulps, and then their dynamic contact angles were measured. The average contact angle hysteresis of their surfaces was less than 5°. Please refer to Fig. 11, which shows contact angle hysteresis experiment results of the silicone hydrogel contact lenses. As can be seen from Fig. 11, the average contact angle hysteresis of the silicon hydrogel contact lenses of Example 8-2 rubbed 300 times is not significantly different from the average contact angle hysteresis of the silicon hydrogel contact lenses of Example 8-2 without being rubbed. It can be seen that the silicone hydrogel contact lenses of Example 8-2 retained good hydrophilicity and had excellent durability after rubbing. Furthermore, since the experimental values of Example 8-2 (sterilization) of Fig. 8A and Example 8-2 (without rubbing) of Fig. 11 were calculated by using the silicone hydrogel contact lenses of Example 8-2 produced by different experiments, the experimental values in the two figures are slightly different.

### Example 13: Atomic force microscopy (AFM) indentation experiment

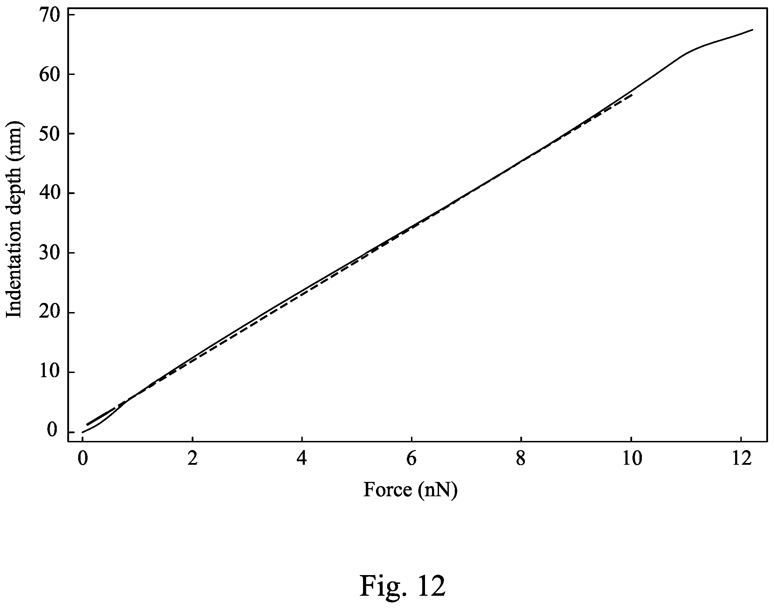

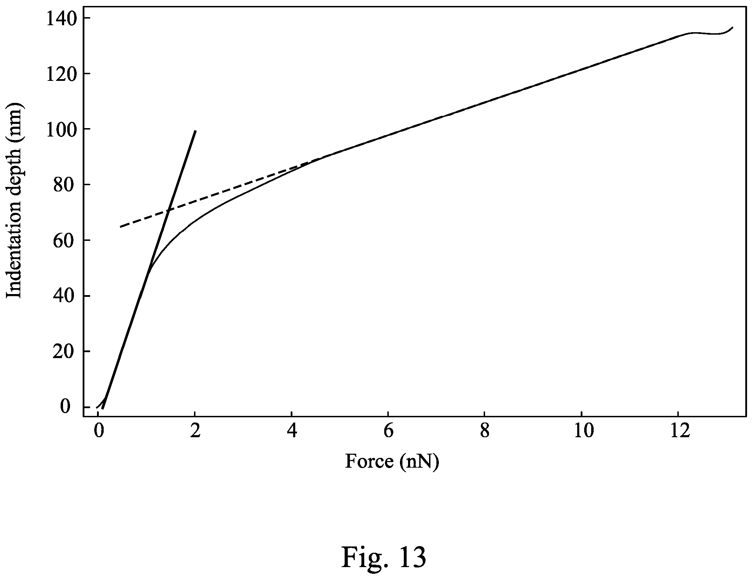

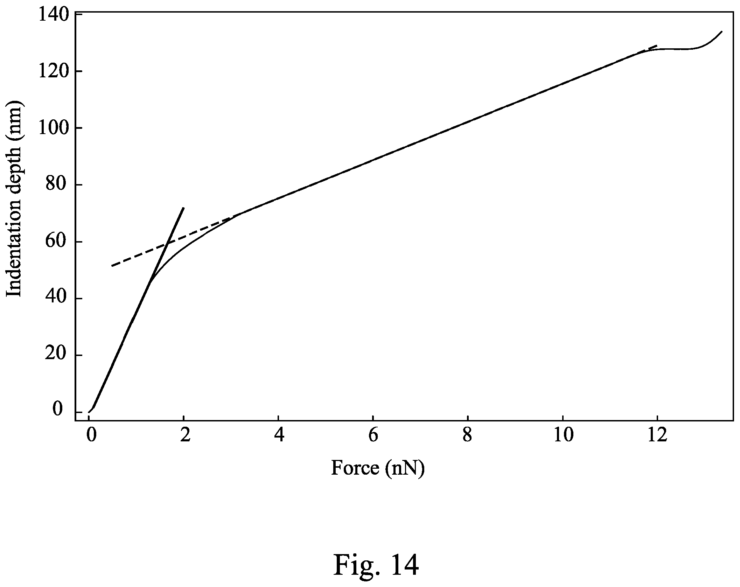

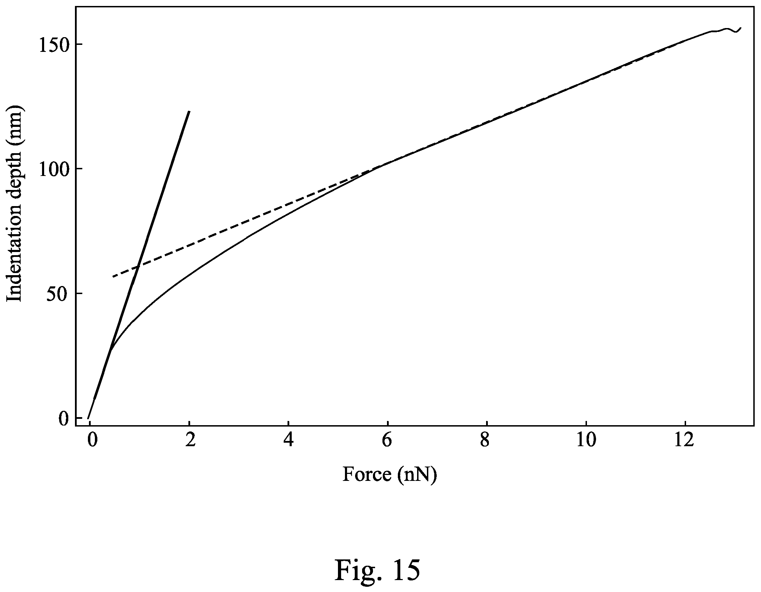

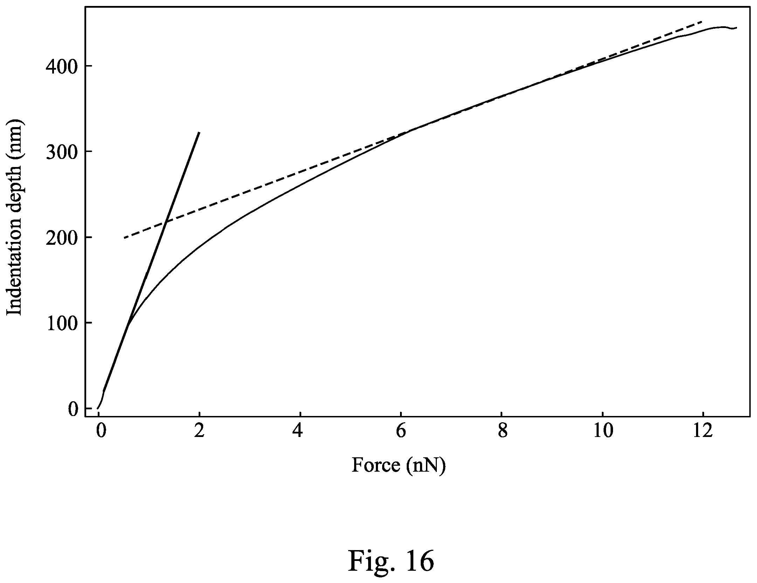

The indentation experiment was conducted on the surfaces of contact lenses using an AFM in aqueous phase to obtain experimental data of the indentation depth and the force on the cantilever of the probe. Please refer to Fig. 12 to Fig. 16. Fig. 12 to Fig. 16 show indentation experiment results of the silicone hydrogel contact lenses of different examples and a comparative example. Fig. 12 shows the indentation experiment results of the contact lens with high oxygen-permeability of Example 1 (without surface treatment). Fig. 13 shows the indentation experiment results of the contact lens with high oxygen-permeability of Example 2 (with surface treatment). Fig. 14 shows the indentation experiment results of the contact lens with high oxygen-permeability of Example 2-1 (with surface treatment). For the preparation process of the contact lens of Example 2-1, please refer to the aforementioned surface treatment process of Example 2. In operation (i), the silicon hydrogel lens body with high oxygen-permeability of Example 1 was placed in a 0.01% solution including a copolymer of acrylamide and vinyl-functionalized acrylic acid and reacted for half an hour to form a single layer of hydrophilic surface modification layer on the silicone hydrogel lens body. Afterwards, operation (ii) was performed to obtain the contact lens of Example 2-1. Fig. 15 shows the indentation experiment results of the contact lens with moderate oxygen-permeability of Example 8-2 (with surface treatment). Fig. 16 shows the indentation experiment results of Dailies Total 1 lens of Alcon of a comparative example.

In Fig. 12 to Fig. 16, the vertical axis indicates the vertical axis indicates the indentation depth of the AFM probe from the surface of the lens body to the inside, and the horizontal axis indicates the force on the cantilever of the AFM probe. Please refer to Fig. 12. Since the surface of the contact lens is not treated, the contact lens is a homogeneous material, and the indentation depth and the force are linearly related. Please refer to Fig. 13 to Fig. 16. Since the surfaces of these contact lenses are treated, the contact lenses contain two different materials: the lens body and the hydrophilic surface modification layer. Therefore, the curves in these figures contain lines with different slopes. The thickness of the hydrophilic surface modification layer can be deduced from the intersection of the slopes of the front and back sections of the curve. Fig. 13 to Fig. 16 respectively show one experiment result. After repeating these experiments several times, the thickness range of each hydrophilic surface modification layer can be obtained as shown in Table 1 below. It can be seen that the hydrophilic surface modification layer of the present disclosure with a thickness of less than 100 nm can maintain excellent hydrophilicity.

**Table 1**

| | Thickness range of hydrophilic surface modification layer (nm) |
|---|---|
| Example 2 | 70-95 |
| Example 2-1 | 60-66 |
| Example 8-2 | 15-60 |
| Comparative example Dailies Total 1 | 210-220 |

In summary, the present disclosure provides a contact lens and a method for manufacturing a contact lens. As can be seen from the above examples, the contact lenses of the present disclosure have excellent hydrophilicity and durability. In the manufacturing method, the surface modification of the lens body requires only a low-temperature environment, and the compound containing the azetidinium group, the epoxy group, the vinyl group, or combinations thereof can react with the reactive functional group on the surface of the lens body to form the modification layer with good adhesion on the lens body. Moreover, the manufacturing method is simplified by forming the lens body by the lens composition including the reactive additive, thus reducing the complexity of the manufacturing process. The components in the solution used to soak the lens body (e.g., the solution including azetidinium-containing compounds or hydrophilic compounds) are slowly consumed and can be reused, thereby reducing the manufacturing costs.

## Claims

1. A contact lens, comprising:
a lens body formed by a lens composition comprising a reactive additive, wherein the reactive additive has a reactive functional group, and a surface of the lens body has the reactive functional group; and
a hydrophilic surface modification layer comprising a modification layer and a first hydrophilic layer, wherein the modification layer is adhered on the surface of the lens body by covalently bonding to the reactive functional group, the first hydrophilic layer is formed on the modification layer by covalently bonding a first hydrophilic compound to the modification layer, and the lens body is sequentially covered by the modification layer and the first hydrophilic layer.

2. The contact lens of claim 1, **characterized in that** the modification layer is formed on the surface of the lens body by covalently bonding a compound containing an azetidinium group, an epoxy group, a vinyl group, or combinations thereof to the reactive functional group.

3. The contact lens of claim 2, **characterized in that** the compound containing the azetidinium group comprises an azetidinium-containing epichlorohydrin-functionalized polyamine, an azetidinium-containing epichlorohydrin-functionalized polyamidoamine, or combinations thereof.

4. The contact lens of any one of claims 1-3, **characterized in that** the reactive functional group comprises a carboxyl group, an amino group, a thiol group, a hydroxyl group, or combinations thereof.

5. The contact lens of any one of claims **1-4, characterized in that** the first hydrophilic compound comprises a monosaccharide having a carboxyl group or an amino group, a disaccharide having a carboxyl group or an amino group, an oligosaccharide having a carboxyl group or an amino group, a polysaccharide having a carboxyl group or an amino group, or combinations thereof.

6. The contact lens of claim 5, **characterized in that** the first hydrophilic compound comprises hyaluronic acid, alginic acid, chondroitin sulfate, polyglutamic acid, sodium pyrrolidone carboxylate, nicotinamide, derivatives of the above compounds, salts of the above acids, or combinations thereof.

7. The contact lens of any one of claims 1-6, **characterized in that** the first hydrophilic compound is a copolymer formed by copolymerizing at least one first monomer and at least one second monomer, the first monomer is a reactive vinylic monomer containing a carboxyl group or an amino group, and the second monomer is a non-reactive vinylic monomer.

8. The contact lens of claim 7, **characterized in that** the reactive vinylic monomer comprises acrylic acid, vinyl-functionalized acrylic acid, methacrylic acid, maleic acid, fumaric acid, aconitic acid, mesaconitic acid, citraconic acid, itaconitic acid, angelic acid, allylamine, 2-acrylamido-2-methylpropane sulfonic acid, vinylsulfonic acid, or combinations thereof.

9. The contact lens of claim 7 or claim 8, **characterized in that** the non-reactive vinylic monomer comprises acrylamide, phosphocholine, polyethylene glycol, 2-aminoethyl methacrylate hydrochloride, N-vinylpyrrolidone, N, N-dimethacrylamide, or combinations thereof.

10. The contact lens of claim 1, **characterized in that** the hydrophilic surface modification layer has a thickness of less than or equal to 100 nm.

11. A manufacturing method of a contact lens, comprising
performing a curing reaction on a lens composition to form a lens body, wherein the lens composition comprises a reactive additive, the reactive additive has a reactive functional group, and a surface of the lens body has the reactive functional group; and
performing a surface modification on the lens body, comprising:
forming a modification layer on the lens body, wherein the modification layer is adhered on the surface of the lens body by covalently bonding to the reactive functional group, wherein forming the modification layer on the lens body comprises contacting the lens body with a compound containing an azetidinium group, an epoxy group, a vinyl group, or combinations thereof, and the compound reacts with the reactive functional group to form a covalent bond, thereby forming the modification layer; and
after forming the modification layer on the lens body, contacting the lens body having the modification layer with a first hydrophilic compound, wherein the first hydrophilic compound reacts with the modification layer to form a covalent bond, thereby forming a first hydrophilic layer on the modification layer.

12. The manufacturing method of the contact lens of claim 11, **characterized in that** contacting the lens body with the compound containing the azetidinium group, the epoxy group, the vinyl group, or combinations thereof is performed at a first reaction temperature of between 20 °C and 140 °C.

13. The manufacturing method of the contact lens of any one of claims 11-12, **characterized in that** the reactive functional group comprises a carboxyl group, an amino group, a thiol group, a hydroxyl group, or combinations thereof.

14. The manufacturing method of the contact lens of any one of claims 11-13, **characterized in that** the first hydrophilic compound comprises a monosaccharide having a carboxyl group or an amino group, a disaccharide having a carboxyl group or an amino group, an oligosaccharide having a carboxyl group or an amino group, a polysaccharide having a carboxyl group or an amino group, or combinations thereof.

15. The manufacturing method of the contact lens of any one of claims 11-14, **characterized in that** the first hydrophilic compound is a copolymer formed by copolymerizing at least one first monomer and at least one second monomer, the first monomer is a reactive vinylic monomer containing a carboxyl group or an amino group, and the second monomer is a non-reactive vinylic monomer.

## Patentansprüche

1. Kontaktlinse, die umfasst:
einen Linsenkörper, der aus einer Linsenmasse gebildet ist, die ein reaktives Additiv enthält, wobei das reaktive Additiv eine reaktive funktionelle Gruppe aufweist und eine Oberfläche des Linsenkörpers die reaktive funktionelle Gruppe aufweist; und
eine hydrophile Oberflächenmodifizierungsschicht, die eine Modifizierungsschicht und eine erste hydrophile Schicht umfasst, wobei die Modifizierungsschicht durch kovalente Bindung an die reaktive funktionelle Gruppe auf der Oberfläche des Linsenkörpers haftet, die erste hydrophile Schicht auf der Modifizierungsschicht durch kovalente Bindung einer ersten hydrophilen Verbindung an die Modifizierungsschicht gebildet wird, und der Linsenkörper nacheinander von der Modifizierungsschicht und der ersten hydrophilen Schicht bedeckt ist.

2. Kontaktlinse nach Anspruch 1, **dadurch gekennzeichnet, dass** die Modifizierungsschicht auf der Oberfläche des Linsenkörpers durch kovalente Bindung einer Verbindung, die eine Azetidiniumgruppe, eine Epoxygruppe, eine Vinylgruppe oder Kombinationen davon enthält, an die reaktive funktionelle Gruppe gebildet wird.

3. Kontaktlinse nach Anspruch 2, **dadurch gekennzeichnet, dass** die die Azetidiniumgruppe enthaltende Verbindung ein azetidiniumhaltiges, mit Epichlorhydrin funktionalisiertes Polyamin, ein azetidiniumhaltiges, mit Epichlorhydrin funktionalisiertes Polyamidoamin oder Kombinationen davon umfasst.

4. Kontaktlinse nach einem der Ansprüche 1 bis 3, **dadurch gekennzeichnet, dass** die reaktive funktionelle Gruppe eine Carboxylgruppe, eine Aminogruppe, eine Thiolgruppe, eine Hydroxylgruppe oder Kombinationen davon umfasst.

5. Kontaktlinse nach einem der Ansprüche 1 bis 4, **dadurch gekennzeichnet, dass** die erste hydrophile Verbindung ein Monosaccharid mit einer Carboxylgruppe oder einer Aminogruppe, ein Disaccharid mit einer Carboxylgruppe oder einer Aminogruppe, ein Oligosaccharid mit einer Carboxylgruppe oder einer Aminogruppe, ein Polysaccharid mit einer Carboxylgruppe oder einer Aminogruppe oder Kombinationen davon umfasst.

6. Kontaktlinse nach Anspruch 5, **dadurch gekennzeichnet, dass** die erste hydrophile Verbindung Hyaluronsäure, Alginsäure, Chondroitinsulfat, Polyglutaminsäure, Natriumpyrrolidoncarboxylat, Nicotinamid, Derivate der oben genannten Verbindungen, Salze der oben genannten Säuren oder Kombinationen davon umfasst.

7. Kontaktlinse nach einem der Ansprüche 1 bis 6, **dadurch gekennzeichnet, dass** die erste hydrophile Verbindung ein Copolymer ist, welches durch Copolymerisation mindestens eines ersten Monomers und mindestens eines zweiten Monomers gebildet wird, wobei das erste Monomer ein reaktives Vinylmonomer ist, das eine Carboxylgruppe oder eine Aminogruppe enthält, und das zweite Monomer ein nicht reaktives Vinylmonomer ist.

8. Kontaktlinse nach Anspruch 7, **dadurch gekennzeichnet, dass** das reaktive Vinylmonomer Acrylsäure, vinylfunktionalisierte Acrylsäure, Methacrylsäure, Maleinsäure, Fumarsäure, Aconitsäure, Mesaconitsäure, Citraconsäure, Itaconsäure, Angelinsäure, Allylamin, 2-Acrylamido-2-methylpropansulfonsäure, Vinylsulfonsäure oder Kombinationen davon umfasst.

9. Kontaktlinse nach Anspruch 7 oder Anspruch 8, **dadurch gekennzeichnet, dass** das nicht reaktive Vinylmonomer Acrylamid, Phosphocholin, Polyethylenglykol, 2-Aminoethylmethacrylat-Hydrochlorid, N-Vinylpyrrolidon, N,N-Dimethacrylamid oder Kombinationen davon umfasst.

10. Kontaktlinse nach Anspruch 1, **dadurch gekennzeichnet, dass** die hydrophile Oberflächenmodifikationsschicht eine Dicke von weniger als oder gleich 100 nm aufweist.

11. Verfahren zur Herstellung einer Kontaktlinse, das umfasst:
Durchführen einer Härtungsreaktion an einer Linsenmasse, um einen Linsenkörper zu bilden, wobei die Linsenmasse ein reaktives Additiv umfasst, das reaktive Additiv eine reaktive funktionelle Gruppe aufweist und eine Oberfläche des Linsenkörpers die reaktive funktionelle Gruppe aufweist; und
Durchführen einer Oberflächenmodifizierung an dem Linsenkörper, umfassend:
Bilden einer Modifizierungsschicht auf dem Linsenkörper, wobei die Modifizierungsschicht durch kovalente Bindung an die reaktive funktionelle Gruppe an der Oberfläche des Linsenkörpers haftet, wobei das Bilden der Modifizierungsschicht auf dem Linsenkörper das In-Kontakt-Bringen des Linsenkörpers mit einer Verbindung umfasst, die eine Azetidiniumgruppe, eine Epoxygruppe, eine Vinylgruppe oder Kombinationen davon enthält, und die Verbindung mit der reaktiven funktionellen Gruppe reagiert, um eine kovalente Bindung zu bilden, wodurch die Modifizierungsschicht gebildet wird; und
nach dem Ausbilden der Modifikationsschicht auf dem Linsenkörper, der Linsenkörper, der die Modifikationsschicht aufweist, mit einer ersten hydrophilen Verbindung in Kontakt gebracht wird, wobei die erste hydrophile Verbindung mit der Modifikationsschicht reagiert, um eine kovalente Bindung zu bilden, wodurch eine erste hydrophile Schicht auf der Modifikationsschicht gebildet wird.

12. Verfahren zur Herstellung der Kontaktlinse nach Anspruch 11, **dadurch gekennzeichnet, dass** das In-Kontakt-Bringen des Linsenkörpers mit der Verbindung, die die Azetidiniumgruppe, die Epoxygruppe, die Vinylgruppe oder Kombinationen davon enthält, bei einer ersten Reaktionstemperatur zwischen 20 °C und 140 °C durchgeführt wird.

13. Verfahren zur Herstellung der Kontaktlinse nach einem der Ansprüche 11-12, **dadurch gekennzeichnet, dass** die reaktive funktionelle Gruppe eine Carboxylgruppe, eine Aminogruppe, eine Thiolgruppe, eine Hydroxylgruppe oder Kombinationen davon umfasst.

14. Verfahren zur Herstellung der Kontaktlinse nach einem der Ansprüche 11-13, **dadurch gekennzeichnet, dass** die erste hydrophile Verbindung ein Monosaccharid mit einer Carboxylgruppe oder einer Aminogruppe, ein Disaccharid mit einer Carboxylgruppe oder einer Aminogruppe, ein Oligosaccharid mit einer Carboxylgruppe oder einer Aminogruppe, ein Polysaccharid mit einer Carboxylgruppe oder einer Aminogruppe oder Kombinationen davon umfasst.

15. Verfahren zur Herstellung der Kontaktlinse nach einem der Ansprüche 11-14, **dadurch gekennzeichnet, dass** die erste hydrophile Verbindung ein Copolymer ist, das durch Co-polymerisation mindestens eines ersten Monomers und mindestens eines zweiten Monomers gebildet wird, wobei das erste Monomer ein reaktives Vinylmonomer ist, das eine Carboxylgruppe oder eine Aminogruppe enthält, und das zweite Monomer ein nicht reaktives Vinylmonomer ist.

## Revendications

1. Lentille de contact, comprenant :
un corps de lentille formé par une composition de lentille comprenant un additif réactif, dans laquelle l'additif réactif présente un groupe fonctionnel réactif, et une surface du corps de lentille présente le groupe fonctionnel réactif ; et
une couche de modification de surface hydrophile comprenant une couche de modification et une première couche hydrophile, dans laquelle la couche de modification est fixée à la surface du corps de la lentille par liaison covalente au groupe fonctionnel réactif, la première couche hydrophile est formée sur la couche de modification par liaison covalente d'un premier composé hydrophile à la couche de modification, et le corps de lentille est recouvert séquentiellement par la couche de modification et la première couche hydrophile.

2. Lentille de contact selon la revendication 1, **caractérisée en ce que** la couche de modification est formée sur la surface du corps de lentille par liaison covalente d'un composé contenant un groupe azétidinium, un groupe époxy, un groupe vinyle ou des combinaisons de ceux-ci au groupe fonctionnel réactif.

3. Lentille de contact selon la revendication 2, **caractérisée en ce que** le composé contenant le groupe azétidinium comprend une polyamine fonctionnalisée par l'épichlorhydrine contenant de l'azétidinium, une polyamidoamine fonctionnalisée par l'épichlorhydrine contenant de l'azétidinium, ou des combinaisons de celles-ci.

4. Lentille de contact selon l'une quelconque des revendications 1-3, **caractérisée en ce que** le groupe fonctionnel réactif comprend un groupe carboxyle, un groupe amino, un groupe thiol, un groupe hydroxyle ou des combinaisons de ceux-ci.

5. Lentille de contact selon l'une quelconque des revendications 1-4, **caractérisée en ce que** le premier composé hydrophile comprend un monosaccharide présentant un groupe carboxyle ou un groupe amino, un disaccharide présentant un groupe carboxyle ou un groupe amino, un oligosaccharide présentant un groupe carboxyle ou un groupe amino, un polysaccharide présentant un groupe carboxyle ou un groupe amino, ou des combinaisons de ceux-ci.

6. Lentille de contact selon la revendication 5, **caractérisée en ce que** le premier composé hydrophile comprend de l'acide hyaluronique, de l'acide alginique, du sulfate de chondroïtine, de l'acide polyglutamique, du carboxylate de pyrrolidone sodique, du nicotinamide, des dérivés des composés ci-dessus, des sels des acides ci-dessus ou des combinaisons de ceux-ci.

7. Lentille de contact selon l'une quelconque des revendications 1-6, **caractérisée en ce que** le premier composé hydrophile est un copolymère formé par copolymérisation d'au moins un premier monomère et d'au moins un second monomère, le premier monomère est un monomère vinylique réactif contenant un groupe carboxyle ou un groupe amino, et le second monomère est un monomère vinylique non réactif.

8. Lentille de contact selon la revendication 7, **caractérisée en ce que** le monomère vinylique réactif comprend de l'acide acrylique, de l'acide acrylique fonctionnalisé au vinyle, de l'acide méthacrylique, de l'acide maléique, de l'acide fumarique, de l'acide aconitique, de l'acide mésaconitique, de l'acide citraconique, de l'acide itaconitique, de l'acide angélique, de l'allylamine, de l'acide 2-acrylamido-2-méthylpropane sulfonique, de l'acide vinylsulfonique ou des combinaisons de ceux-ci.

9. Lentille de contact selon la revendication 7 ou la revendication 8, **caractérisée en ce que** le monomère vinylique non réactif comprend de l'acrylamide, de la phosphocholine, du polyéthylène glycol, du chlorhydrate de méthacrylate de 2-aminoéthyle, de la N-vinylpyrrolidone, du N,N-diméthacrylamide ou des combinaisons de ceux-ci.

10. Lentille de contact selon la revendication 1, **caractérisée en ce que** la couche de modification de surface hydrophile présente une épaisseur inférieure ou égale à 100 nm.

11. Procédé de fabrication d'une lentille de contact, comprenant
l'exécution d'une réaction de durcissement sur une composition de lentille pour former un corps de lentille, dans lequel la composition de lentille comprend un additif réactif, l'additif réactif présente un groupe fonctionnel réactif, et la surface du corps de lentille présente le groupe fonctionnel réactif ; et
l'exécution d'une modification de surface sur le corps de lentille, comprenant :
la formation d'une couche de modification sur le corps de lentille, dans lequel la couche de modification est fixée à la surface du corps de lentille par liaison covalente avec le groupe fonctionnel réactif, dans lequel la formation de la couche de modification sur le corps de lentille comprend la mise en contact du corps de lentille avec un composé contenant un groupe azétidinium, un groupe époxy, un groupe vinyle ou des combinaisons de ceux-ci, et le composé réagit avec le groupe fonctionnel réactif pour former une liaison covalente, formant ainsi la couche de modification ; et
après la formation de la couche de modification sur le corps de lentille, la mise en contact du corps de lentille présentant la couche de modification avec un premier composé hydrophile, dans lequel
le premier composé hydrophile réagit avec la couche de modification pour former une liaison covalente, formant ainsi une première couche hydrophile sur la couche de modification.

12. Procédé de fabrication de la lentille de contact selon la revendication 11, **caractérisé en ce que** la mise en contact du corps de lentille avec le composé contenant le groupe azétidinium, le groupe époxy, le groupe vinyle ou des combinaisons de ceux-ci est effectuée à une première température de réaction comprise entre 20 °C et 140 °C.

13. Procédé de fabrication de la lentille de contact selon l'une quelconque des revendications 11-12, **caractérisé en ce que** le groupe fonctionnel réactif comprend un groupe carboxyle, un groupe amino, un groupe thiol, un groupe hydroxyle ou des combinaisons de ceux-ci.

14. Procédé de fabrication de la lentille de contact selon l'une quelconque des revendications 11-13, **caractérisé en ce que** le premier composé hydrophile comprend un monosaccharide présentant un groupe carboxyle ou un groupe amino, un disaccharide présentant un groupe carboxyle ou un groupe amino, un oligosaccharide présentant un groupe carboxyle ou un groupe amino, un polysaccharide présentant un groupe carboxyle ou un groupe amino, ou des combinaisons de ceux-ci.

15. Procédé de fabrication de la lentille de contact selon l'une quelconque des revendications 11-14, **caractérisé en ce que** le premier composé hydrophile est un copolymère formé par copolymérisation d'au moins un premier monomère et d'au moins un second monomère, le premier monomère est un monomère vinylique réactif contenant un groupe carboxyle ou un groupe amino, et le second monomère est un monomère vinylique non réactif.
